# EUROPEAN PATENT SPECIFICATION

(11) **EP 4 282 280 B1**
(45) Date of publication and mention of the grant of the patent: **23.07.2025**
(21) Application number: 23169889.5
(22) Date of filing: 25.04.2023
(51) Int. Cl.: A23L 29/212, A23L 29/30, C08B 30/12, A23C 9/15, A23C 19/068, A23C 19/09, A23D 7/015

(54) **A METHOD AND A MIXER FOR COOKING A FOOD PRODUCT THAT CONTAINS STARCH**
VERFAHREN UND MISCHER ZUM KOCHEN EINES STÄRKEHALTIGEN LEBENSMITTELS
PROCÉDÉ ET MÉLANGEUR POUR CUIRE UN PRODUIT ALIMENTAIRE QUI CONTIENT DE L'AMIDON

(30) Priority: 27.04.2022 EP 22170391
(43) Date of publication of application: 29.11.2023
(73) Proprietor: Tetra Laval Holdings & Finance S.A., 1009 Pully (CH)
(72) Inventor: BRINTJE, Ulrika, 22186 Lund (SE); MORTENSEN, Hans Henrik, 8270 Højbjerg (SE)
(74) Representative: Tetra Pak Patent Attorneys

(56) References cited:
- CN-A- 105 189 563
- US-A- 5 584 937
- US-B2- 11 136 606
- LEE INDUSTRIES: "Our Lee Kettle Support Features: Lee Kettle Trunnion Style Features: @BULLET Free-pouring spout @BULLET Tilt handle on CD style @BULLET Hydraulic tilting on CHD", 26 November 2020 (2020-11-26), XP055966281, Retrieved from the Internet <URL:https://www.leeind.com/resource-center/data-sheets?pdf=1749&title=Lee%20Kettles> [retrieved on 20220929]

## Description

### Technical Field

The invention relates to food processing technology. More particularly, it is related to a method and a mixer for cooking a food product that comprises starch.

### Background Art

Today mixers are widely used in the field of food processing for dissolving, emulsifying or dispersing powder and liquid ingredients into a liquid medium. A benefit of using mixers, such as high shear mixers, is that it is made possible to achieve a food product that is smooth, homogenous and with consistent quality. A wide range of products can be processed in mixers, such as sauces, mayonnaise and recombined milk.

A specific use of mixers involves starch processing, also referred to as starch cooking, starch preparation or starch gelatinization. If starch is used as a thickener in a food product, the starch processing is often one of the first steps in a food processing scheme. For instance, in case a low fat mayonnaise is to be produced, one of the first steps in the process may be to process the starch. If this step is performed in the high shear mixer, starch granules may be fed into the mixer and in the mixer, these are combined with water, heated and subjected to shear such that a smooth mixture of starch and water is formed, by swelling the starch so that a more viscous mixture is obtained.

After the mixture is formed, further ingredients may be added into the mixer such that also further processing steps in preparing the food product is performed in the mixer. Alternatively, after the starch is prepared in the mixer, this may be fed into a tank and transported to another piece of equipment performing the further steps in processing the food product.

Related technologies are described in patent document US5584937A and the Super Jacket Kettles manufactured by Lee Industries in Philipsburg.

Even though it is known to process starch in mixers, there is room for improvement. More particularly, by being able to more precisely control the starch processing, there will be less undercooked and overcooked starch granules, in turn resulting in less starch being needed for obtaining the desired product properties. Reducing food waste has in turn positive effects on both cost efficiency as well as environmental impact.

### Summary

It is an object of the invention to at least partly overcome one or more of the above-identified limitations of the prior art. In particular, it is an object to provide improved starch processing within the food industry, enabling a smaller amount of starch being required. Another object is to improve energy efficiency when using starch as an ingredient in a food product. Still another object is to provide improved quality of the food product made based on a mixture resulting from the starch processing.

According to a first aspect, it is provided a method for cooking a food product by using a mixer having a vessel at least partially surrounded by a heating jacket, and a steam injector arranged to inject steam into the vessel. The food product comprises starch and the method comprises: providing liquid into the vessel; providing starch into the vessel; mixing the liquid and the starch to form a mixture inside the vessel; heating the mixture for gelatinizing the starch by injecting steam at a first steam flow rate into the vessel during a first period of time until a first set point temperature is reached; heating the mixture for gelatinizing the starch further by feeding a heating medium through the heating jacket during a subsequent, second period of time until a second set point temperature is reached which is higher than the first set point temperature; and during the step of heating by feeding the heating medium through the heating jacket, reducing the injecting of steam at to a second steam flow rate, wherein in the second steam flow rate is 0 to 30% of the first steam flow rate. The second set point temperature is within a range of 50-70 °C.

Herein, "steam flow rate" should be understood as the mass (or amount) of steam that is injected per unit time. The temperature of the steam is higher than the temperature of the mixture. The steam flow rate is therefore directly related to the rate by which the temperature of the mixture increases, which could be measured e.g. in °C per minute. Thus, reducing the injecting of steam to a second steam flow rate that is 0 to 30% of the first steam flow rate means that the rate by which the mixture's temperature increases due to steam injection is lower during the heating by feeding the heating medium through the heating jacket, as compared to when steam is injected at the first steam flow rate. Typically, the heating by feeding the heating medium through the heating jacket may comprise heating the mixture such that the rate by which the temperature of the mixture increases due to both jacket heating and steam heating is 0 to 30 % lower compared to the rate by which the temperature of the mixture increased during the heating by injecting steam at the first steam flow rate.

An advantage with heating the starch by using a two-stage approach is that a high quality product can be provided in an energy efficient manner and with low product losses. By rapidly increasing heat during the first stage by using the steam and thereafter, during the second stage, more slowly increasing the temperature by using the heating jacket, a risk of under-cooking as well as a risk of over-cooking starch granules can be lowered while still ensuring a relatively fast cooking time. As an effect of that less starch granules being non-optimally processed, a better yield can be achieved.

The first set point temperature may be within a range of 20-75 % of the second set point temperature. Alternatively, the first set point temperature may be within a range of 20-65 % of the second set point temperature. Alternatively, the first set point temperature may be within a range of 10-64 % of the second set point temperature. The first set point temperature may be within a range of 5-45 °C.

The first period of time may be within a range of 20-50 % of the second period of time. Alternatively, the first period of time may be within a range of 30-50 % of the second period of time. The first period of time may be within a range of 2-10 min. Alternatively, the first period of time may be within a range of 2-8 min. The second period of time may be within a range of 10-30 min.

The heating during the first period of time may comprise increasing the temperature of the mixture by a first rate during the first period of time, and the heating during the second period of time may comprise increasing the temperature of the mixture by a second rate during the second period of time, wherein the second rate may be lower than the first rate.

The second rate may be less than 80 %, less than 60 % or less than 50 % of the first rate. The first rate of increasing the temperature may be within a range of 1-10 °C per minute. The second rate of increasing the temperature may be within a range of 1-5 °C per minute.

The method may further comprise cooling the mixture by decreasing the temperature of the mixture by a third rate during a third period of time, wherein the third rate of decreasing the temperature may be within a range of 1-8 °C per minute.

The method may further comprise subjecting the mixture to a first shear rate during the first period of time by injecting steam into the vessel at the first steam flow rate, and subjecting the mixture to a second shear rate during the second period of time by rotating an agitator and/or using the rotor-stator arrangement located inside the vessel, wherein the second shear rate may be lower than the first shear rate.

According to an example not forming part of the claimed subject-matter, it is provided a mixer for cooking a food product, said mixer comprising a vessel at least partially surrounded by a heating jacket, a steam injector arranged to inject steam into the vessel, a processor unit and a memory unit that comprises software instructions which when executed by the processor unit cause the mixer to carry out the method according to the first aspect, including all embodiments thereof.

The mixer may further comprise an agitator and/or a rotor-stator arrangement inside the vessel, wherein the steam injector may be arranged to subject the starch to a first shear rate, and the agitator and/or the rotor-stator arrangement may be arranged to subject the starch to a second shear rate.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1 is a cross-sectional view of a mixer.
Fig. 2 is a graph illustrating temperature and shear versus time in a method for cooking a food product that comprises starch.
Fig. 3 is a flow chart illustrating a method for cooking a food product that comprises starch.

### Detailed Description

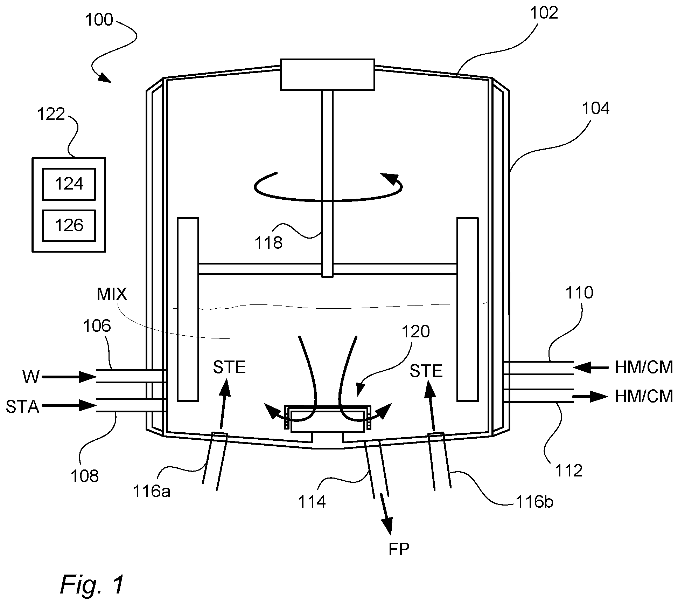

With reference to Fig. 1 a mixer 100, such as a high shear mixer, is generally illustrated. The mixer comprises a vessel 102, often made of stainless steel, provided with a heating jacket 104. A liquid, such as water, W can be provided into the vessel 102 via a first inlet 102 and starch STA, e.g. in the form of starch granules or powder, can be provided via a second inlet 108. Even though illustrated that the first and second inlet 106, 108 are placed in a side wall of the vessel 102 in fig. 1, it is also possible to have these inlets placed in a bottom of the vessel 102. To provide for that the starch STA and the liquid W in the vessel 102 may be heated or cooled, a jacket inlet 110 and a jacket outlet 112 are connected to the heating jacket 104 such that a heating medium HM or a cooling medium CM can be fed through the heating jacket 104.

Once the starch STA and the liquid W are combined into a mixture MIX, this may be fed out from the vessel 102 via an outlet 114 in form of a food product FP. The food product FP may be a final food product or may be a food product that may be further processed to thereafter form a final food product that can be consumed by humans. In the latter case the mixture MIX, sometimes referred to as starch phase, may as indicated be transferred to another piece of equipment in which this is combined with other food ingredients and processed into a final food product. In the former case food ingredients may be added into the vessel 102 such that the mixture MIX in combination with the other food ingredients form the final food product inside the mixer 100.

Further, to provide for that the starch STA and the liquid W are heated efficiently when being processed into the mixture MIX, steam STE may be injected into the vessel 102 via one or several steam injectors 116a,b placed in the bottom of the vessel 102.

To provide for that the starch STA and the liquid W are heated efficiently via the heating jacket 104 during the processing, an agitator 118 may be provided. The agitator 118 serves the purpose of mixing the starch STA and liquid W thereby resulting in that different parts of mixture MIX are subjected to heat exerted from the heating jacket 104 such that even heat distribution can be provided, but also that the starch STA and liquid W are subjected to a shear. By being subjected to a shear, properties of starch STA are affected and as an effect, a more efficient mixing can be achieved.

As illustrated, it is further possible to have a rotor-stator arrangement 120 placed in the bottom of the vessel 102. This arrangement also serves the purpose of subjecting the starch STA and liquid W to shear, resulting in that the mixing is made efficiently.

To control the operation of the mixer 100, a control unit 122 may be provided. Even though not illustrated, the control unit 122 may be communicatively connected to the different parts of the mixer 100 such that the operation of these parts can be made on individual basis, e.g. the control unit 122 can be arranged to control the steam injectors 116a, 116b, the flow of the media through the heating jacket 104 and the agitator 118 individually. The control unit 122 may comprise a processor unit 124 and a memory unit 126 that comprises software instructions which when executed by the processor unit 124 cause the mixer 100 to carry out the method described herein. Even though not illustrated, temperature sensors may be provided for continuously reporting a temperature of the mixture MIX to the control unit 122.

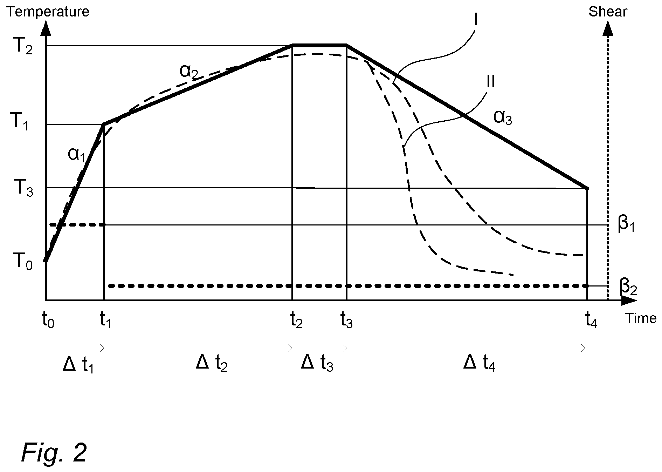

With reference to Fig. 2, to provide for the starch STA is gelatinized efficiently, that is, providing for that a level of undercooked starch is low and/or that a level of overcooked starch is low, it has been found that a two-stage heating approach is advantageous. In one example, in a first stage performed during a first period of time Δt₁, starting in an initial point of time t₀ and extending to a first point of time t₁, the steam STE can be injected into the mixture MIX. During this stage heating may be provided via the heating jacket 104 as well. This stage continues until a first set point temperature T₁ is reached, i.e. until a temperature of the mixture MIX is increased from an initial temperature T₀ to the first set point temperature T₁. An effect of injecting steam into the mixture MIX is that rapid heating can be achieved. As illustrated, the temperature of the vessel 102 can be increased at a first rate α₁. The first rate α₁ is the temperature increase per unit time, which could be measured as °C per minute. During this first stage, steam is injected at a first steam flow rate.

Once having reached the first set point temperature T₁ and until a second set point temperature T₂ is reached, during a second period of time Δt₂, running from the first point of time t₁ to a second point of time t₂, the temperature of the mixture MIX is increased by that the mixture MIX is heated via the heating jacket 104 either in isolation or in combination with that the steam STE is injected via the steam injector 116a,b at a much lower steam flow rate. Thus, during this second period of time Δt₂, the steam STE is injected at a second steam flow rate that is lower than the first steam flow rate, such as 0 to 30% of the first steam flow rate. This means that the stem injection may, in one embodiment, be fully stopped during the second period of time Δt₂. As an effect of lowering or cutting off steam inflow into the vessel 102, a second rate α₂, representing temperature increase rate during the second period of time Δt₂, is lower than the first rate α₁.

Each of the first and second set point temperatures T₁, T₂ may be reached by using both steam and the heating jacket during both periods of time Δt₁, Δt₂. However, the second rate α₂ is lower than the first rate α₁. This is preferably accomplished by injecting steam STE at the second steam flow rate during the second period of time Δt₂, with the second steam flow rate being 0 to 30% of the first steam flow rate which was used during the first period of time Δt₁.

By using first quicker heating, i.e. a first and higher heating rate α₁, and thereafter a second slower heating, i.e. a second and lower heating rate α₂, gelatinizing the starch STA can be improved both in terms of quality, i.e. reduced number of undercooked and/or overcooked starch granules, as well as energy efficiency.

During a third period of time Δt₃, running from the second point of time t₂ to a third point of time t₃, the temperature can be kept at the second set point temperature T₂. During this period of time, shear and agitation may be provided via the agitator 118 and/or the rotor-stator arrangement 120.

During a fourth period of time Δt₄, running from the third point of time t₃ to a fourth point of time t₄, the temperature can be lowered at a third rate α₃ from the second set point temperature T₂ to a third set point temperature T₃. In this cooling phase, the cooling medium CM may be fed into the heating jacket 104. Even though not illustrated, it is also possible to cool down the mixture MIX by using an external device, such as a scraped surface heat exchanger (SSHE), a plate heat exchanger (PHE), or a tubular heat exchanger (THE). The mixture MIX may be fed to this external device and then fed back to the mixer 100 for further processing or the mixture MIX may be fed downstream to other pieces of equipment for further processing. An advantage of having the external device for cooling down the mixture MIX is that a risk of overheating the mixture MIX can be reduced, thereby reducing the risk of overcooking the starch STA, which may in the form of a starch phase or in a starch-thickened condiment sauce, e.g. marinade or barbecue sauce. By being able to reduce the amount of overcooked starch, i.e. by improving the yield of the starch, it is made possible to achieve a high viscous food product from a low amount of starch. In addition to delivering high quality product properties, the improved viscosity also has an effect of shelf life, i.e. the properties of the food product can be maintained for a longer period of time.

As illustrated in Fig. 2, the shear subjected to the mixture MIX is different during different periods of time. In the example illustrated, a first shear rate β₁, illustrated by dotted line, can be provided during the first period of time Δt₁ and a second shear rate β₂, being less than the first shear rate β₁, can be provided during the second, third and fourth period of time Δt₂, Δt₃, Δt₄. The first shear rate β₁ may be at least 50% greater than the second shear rate β₂. By adjusting the flow rate of steam STE injected during the second period of time Δt₂, the shear rate can be affected. Further, the shear rate may also be affected by the rotor-stator arrangement 120 and/or the agitator 118. During the fourth period of time Δt₄, the shear rate may also be affected by the external device used for cooling the mixture MIX.

Even though the temperatures and periods of time may be different for different mixtures MIX, and in turn different food products, it has been found that the first set point temperature T₁ may be within a range of 20-75 % of the second set point temperature T₂. Further, it has been found that the first set point temperature T₁ can be within a range of 5-45 °C. The second set point temperature T₂ may be within a range of 50-70 °C. Regarding the periods of times being used, the first period of time Δt₁ may be within a range of 20-50 % of the second period of time Δt₂. The first period of time Δt₁ may be within a range of 2-10 min. The second period of time may be within a range of 10-30 min. Regarding the first, second and third rates α₁, α₂, α₃, these may also vary for different food products, but it has been found beneficial to have the second rate α₂ is 80 % of the first rate α₁ or lower. The first rate α₁ of increasing the temperature may be within a range of 1-10 °C per minute. The second rate of increasing the temperature may be within a range of 1-5 °C per minute. These values applies for most starch types commonly used in food products.

In practical applications the rates α₁, α₂, α₃ may not always be as linear as illustrated in Fig. 2. Instead they may look more like one of the lines illustrated by dashed lines I and II.

By being able to control the heating, the shear rate and also the cooling as described above, it is made possible to achieve a high yield during starch processing, which may be 10% or less under-cooked starch granules, at least 80% properly cooked starch granules, and 10% or less over-cooked starch granules.

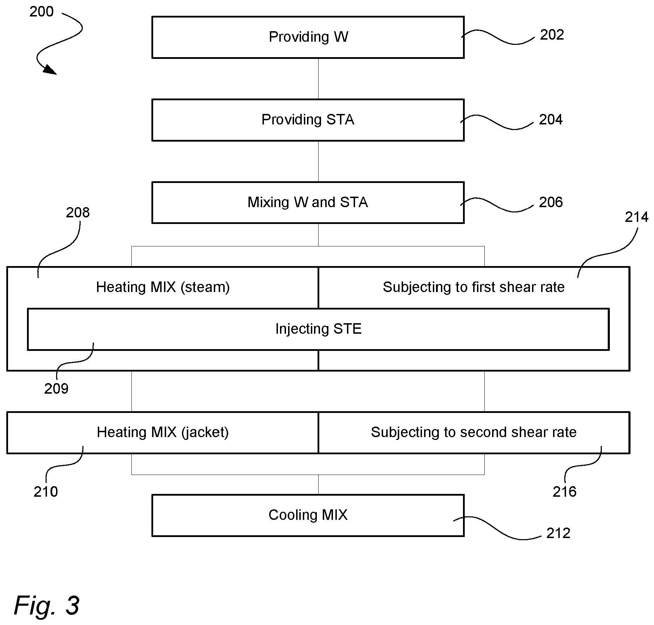

Fig. 3 is a flowchart illustrating a method 200 for cooking a food product which includes gelatinizing starch STA by using the mixer 100 illustrated in fig. 1. As illustrated, in a first step 202, the liquid W can be provided into the vessel 102 via the first inlet 106. In parallel, before or after, in a second step 204, the starch STA can be provided via the second inlet 108. After having received the liquid W and the starch STA, in a third step 206, the liquid W and the starch STA can be mixed into the mixture MIX. In a fourth step 208, the mixture MIX can be heated by the steam STE injected into the vessel 102. After being heated by the steam STE, in a fifth step 210, the mixture MIX can be heated by using the heating jacket 104. As described above, the steam STE may also be injected during the fifth step 210, but at a lower steam flow rate compared to the fourth step 208.

In line with the graph presented in Fig. 2, the fifth step 210 may be followed by a sixth step 212 in which the mixture MIX is cooled. The cooling may be provided by that the cooling medium is fed through the heating jacket 104, but it is also possible, as described above, to cool down the mixture MIX via the external device.

In parallel with the fourth step 208, the mixture MIX may be subjected to the first shear rate β₁ in a seventh step 214. This first shear rate β₁ may be formed by the steam STE injected via the steam injector 116a,b.

In parallel with the fifth step 210, while the mixture MIX is heated via the heating medium HM fed through the heating jacket 104, the mixture MIX may be subjected to a second shear rate β₂ in an eighth step 216. The shear in this step may be generated by the agitator 118 and/or the rotor-stator arrangement 120. The shear may also be generated, in combination with the agitator 118 and/or the rotor-stator arrangement 120, by the steam STE injected via the steam injectors 116a, b, but the second steam flow rate used during this eighth step is lower than the first steam flow rate used during the seventh step 214.

From the description above follows that, although various embodiments of the invention have been described and shown, the invention is not restricted thereto, but may also be embodied in other ways within the scope of the subject-matter defined in the following claims.

## Claims

1. A method (200) for cooking a food product (FP) by using a mixer (100) having a vessel (102) at least partially surrounded by a heating jacket (104), and a steam injector (116a, 116b) arranged to inject steam into the vessel (102), the food product comprising starch (STA) and the method (200) comprising
providing (202) liquid (W) into the vessel (102),
providing (204) the starch (STA) into the vessel (102),
mixing (206) the liquid (W) and the starch (STA) to form a mixture (MIX) inside the vessel (102),
heating (208) the mixture (MIX) for gelatinizing the starch (STA) by injecting (209) steam (STE) at a first steam flow rate into the vessel (102) during a first period of time (Δt₁) until a first set point temperature (T₁) is reached,
heating (210) the mixture (MIX) for gelatinizing the starch (STA) further by feeding a heating medium (HM) through the heating jacket (104) during a subsequent, second period of time (Δt₂) until a second set point temperature (T₂) is reached which is higher than the first set point temperature (T₁), **characterized by**
during the step of heating (210) by feeding the heating medium (HM) through the heating jacket (104), reducing the injecting (209) of steam (STE) to a second steam flow rate, wherein the second steam flow rate is 0 to 30% of the first steam flow rate, wherein the second set point temperature (T₂) is within a range of 50-70 °C.

2. The method according to claim 1, wherein the first set point temperature (T₁) is within a range of 10-64 % of the second set point temperature (T₂).

3. The method according to any one of the preceding claims, wherein the first set point temperature (T₁) is within a range of 5-45 °C.

4. The method according to any one of the preceding claims, wherein the first period of time (Δt₁) is within a range of 20-50 % of the second period of time (Δt₂).

5. The method according to any one of the preceding claims, wherein the first period of time (Δt₁) is within a range of 2-10 min.

6. The method according to any one of the preceding claims, wherein the second period of time is within a range of 10-30 min.

7. The method according to any one of the preceding claims, wherein
the heating (208) during the first period of time (Δt₁) comprises increasing the temperature of the mixture by a first rate (α₁) during the first period of time (Δt₁), and
the heating (210) during the second period of time (Δt₂) comprises increasing the temperature of the mixture by a second rate (α₂) during the second period of time (Δt₂), the second rate (α₂) being lower than the first rate (α₁).

8. The method according to claim 7, wherein the second rate (α₂) is less than 80 % of the first rate (α₁), or lower.

9. The method according to claim 7 or 8, wherein the first rate (α₁) of increasing the temperature is within a range of 1-10 °C per minute.

10. The method according to any one of the claims 7 to 9, wherein the second rate (α₂) of increasing the temperature is within a range of 1-5 °C per minute.

11. The method according to any one of the preceding claims, comprising cooling (212) the mixture (MIX) by decreasing the temperature of the mixture by a third rate (α₃) during a third period of time (Δt₃), wherein the third rate (α₃) of decreasing the temperature is within a range of 1-8 °C per minute.

12. The method according to any one of the preceding claims, comprising subjecting (214) the mixture to a first shear rate (β₁) during the first period of time (Δt₁) by injecting (209) steam (STE) into the vessel (102) at the first steam flow rate, and
subjecting (216) the mixture to a second shear rate (β₂) during the second period of time (Δt₂) by rotating an agitator (118) and/or using a rotor-stator arrangement (120) located inside the vessel (102), wherein the second shear rate (β₂) is lower than the first shear rate (β₁).

## Patentansprüche

1. Verfahren (200) zum Kochen eines Lebensmittelprodukts (FP) durch Verwenden eines Mischers (100), der ein Gefäß (102), das zumindest teilweise von einem Heizmantel (104) umgeben ist, und einen Dampfeinspritzer (116a, 116b), der dazu angeordnet ist, Dampf in das Gefäß (102) einzuspritzen, aufweist, wobei das Lebensmittelprodukt Stärke (STA) umfasst und das Verfahren (200) Folgendes umfasst:
Leiten (202) einer Flüssigkeit (W) in das Gefäß (102),
Leiten (204) der Stärke (STA) in das Gefäß (102),
Vermischen (206) der Flüssigkeit (W) und der Stärke (STA), um ein Gemisch (MIX) in dem Gefäß (102) herzustellen,
Erwärmen (208) des Gemischs (MIX) zum Gelieren der Stärke (STA) durch Einspritzen (209) von Dampf (STE) mit einer ersten Dampfströmungsgeschwindigkeit in das Gefäß (102) während eines ersten Zeitraums (Δt₁), bis eine erste Solltemperatur (T₁) erreicht ist,
Erwärmen (210) des Gemischs (MIX) zum weiteren Gelieren der Stärke (STA) durch Einspeisen eines Heizmediums (HM) durch den Heizmantel (104) während eines anschließenden zweiten Zeitraums (Δt₂), bis eine zweite Sollwerttemperatur (T₂) erreicht ist, die höher ist als die erste Sollwerttemperatur (T₁), **gekennzeichnet durch** während des Schritts des Heizens (210) durch Einspeisen des Heizmediums (HM) durch den Heizmantel (104) Verringern des Einspritzens (209) des Dampfs (STE) auf eine zweite Dampfströmungsgeschwindigkeit, wobei die zweite Dampfströmungsgeschwindigkeit 0 bis 30 % der ersten Dampfströmungsgeschwindigkeit beträgt, wobei die zweite Sollwerttemperatur (T₂) im Bereich von 50-70 °C liegt.

2. Verfahren nach Anspruch 1, wobei die erste Sollwerttemperatur (T₁) im Bereich von 10-64 % der zweiten Sollwerttemperatur (T₂) liegt.

3. Verfahren nach einem der vorstehenden Ansprüche, wobei die erste Sollwerttemperatur (T₁) im Bereich von 5-45 °C liegt.

4. Verfahren nach einem der vorstehenden Ansprüche, wobei der erste Zeitraum (Δt₁) im Bereich von 20-50 % des zweiten Zeitraums (Δt₂) liegt.

5. Verfahren nach einem der vorstehenden Ansprüche, wobei der erste Zeitraum (Δt₁) im Bereich von 2-10 min liegt.

6. Verfahren nach einem der vorstehenden Ansprüche, wobei der zweite Zeitraum im Bereich von 10-30 min liegt.

7. Verfahren nach einem der vorstehenden Ansprüche, wobei
das Erwärmen (208) während des ersten Zeitraums (Δt₁) das Erhöhen der Temperatur des Gemischs mit einer ersten Geschwindigkeit (α₁) während des ersten Zeitraums (Δt₁) umfasst, und
das Erwärmen (210) während des zweiten Zeitraums (Δt₂) das Erhöhen der Temperatur des Gemischs mit einer zweiten Geschwindigkeit (α₂) während des zweiten Zeitraums (Δt₂) umfasst, wobei die zweite Geschwindigkeit (α₂) niedriger ist als die erste Geschwindigkeit (α₁).

8. Verfahren nach Anspruch 7, wobei die zweite Geschwindigkeit (α₂) weniger als 80 % der ersten Geschwindigkeit (α₁) oder niedriger ist.

9. Verfahren nach Anspruch 7 oder 8, wobei die erste Geschwindigkeit (α₁) des Erhöhens der Temperatur in einem Bereich von 1-10 °C pro Minute liegt.

10. Verfahren nach einem der Ansprüche 7 bis 9, wobei die zweite Geschwindigkeit (α₂) des Erhöhens der Temperatur in einem Bereich von 1-5 °C pro Minute liegt.

11. Verfahren nach einem der vorstehenden Ansprüche, umfassend Abkühlen (212) des Gemischs (MIX) durch Verringern der Temperatur des Gemischs mit einer dritten Geschwindigkeit (α₃) während eines dritten Zeitraums (Δt₃), wobei die dritte Geschwindigkeit (α₃) des Verringerns der Temperatur in einem Bereich von 1-8 °C pro Minute liegt.

12. Verfahren nach einem der vorstehenden Ansprüche, Folgendes umfassend:
Aussetzen (214) des Gemischs einer ersten Schergeschwindigkeit (β₁) während des ersten Zeitraums (Δt₁) durch Einspritzen (209) von Dampf (STE) in das Gefäß (102) mit der ersten Dampfströmungsgeschwindigkeit und Aussetzen (216) des Gemischs einer zweiten Schergeschwindigkeit (β₂) während des zweiten Zeitraums (Δt₂) durch Drehen eines Rührwerks (118) und/oder Verwenden einer Rotor-Stator-Anordnung (120), die innerhalb des Gefäßes (102) angeordnet ist, wobei die zweite Schergeschwindigkeit (β₂) niedriger ist als die erste Schergeschwindigkeit (β₁).

## Revendications

1. Procédé (200) pour cuire un produit alimentaire (FP) en utilisant un mélangeur (100) ayant un récipient (102) au moins partiellement entouré par une chemise de chauffage (104), et un injecteur de vapeur (116a, 116b) agencé pour injecter de la vapeur dans le récipient (102), le produit alimentaire comprenant de l'amidon (STA) et le procédé (200) comprenant les faits
de mettre (202) un liquide (W) dans le récipient (102), de mettre (204) de l'amidon (STA) dans le récipient (102),
de mélanger (206) le liquide (W) et l'amidon (STA) pour former un mélange (MIX) à l'intérieur du récipient (102), de chauffer (208) le mélange (MIX) pour gélatiniser l'amidon (STA) en injectant (209) de la vapeur (STE), à un premier débit de vapeur, dans le récipient (102) durant un premier laps de temps (Δt₁) jusqu'à ce qu'une première température de valeur de consigne (T₁) soit atteinte,
de chauffer (210) le mélange (MIX) pour gélatiniser l'amidon (STA) davantage en fournissant un agent de chauffage (HM) à travers la chemise de chauffage (104) durant un deuxième laps de temps subséquent (Δt₂) jusqu'à ce qu'une seconde température de valeur de consigne (T₂) soit atteinte qui est supérieure à la première température de valeur de consigne (T₁), **caractérisé par** le fait,
durant l'étape consistant à chauffer (210) en fournissant l'agent de chauffage (HM) à travers la chemise de chauffage (104), de réduire l'injection (209) de la vapeur (STE) jusqu'à un second débit de vapeur, dans lequel le second débit de vapeur est de 0 à 30 % du premier débit de vapeur, dans lequel la seconde température de valeur de consigne (T₂) est dans les limites d'une plage de 50 à 70 °C.

2. Procédé selon la revendication 1, dans lequel la première température de valeur de consigne (T₁) est dans les limites d'une plage de 10 à 64 % de la seconde température de valeur de consigne (T₂).

3. Procédé selon l'une quelconque des revendications précédentes, dans lequel la première température de valeur de consigne (T₁) est dans les limites d'une plage de 5 à 45 °C.

4. Procédé selon l'une quelconque des revendications précédentes, dans lequel le premier laps de temps (Δt₁) est dans les limites d'une plage de 20 à 50 % du deuxième laps de temps (Δt₂).

5. Procédé selon l'une quelconque des revendications précédentes, dans lequel le premier laps de temps (Δt₁) est dans les limites d'une plage de 2 à 10 min.

6. Procédé selon l'une quelconque des revendications précédentes, dans lequel le deuxième laps de temps est dans les limites d'une plage de 10 à 30 min.

7. Procédé selon l'une quelconque des revendications précédentes, dans lequel
le fait de chauffer (208) durant le premier laps de temps (Δt₁) comprend le fait d'augmenter la température du mélange selon un premier taux (α₁) durant le premier laps de temps (Δt₁), et
le fait de chauffer (210) durant le deuxième laps de temps (Δt₂) comprend le fait d'augmenter la température du mélange selon un second taux (α₂) durant le deuxième laps de temps (Δt₂), le deuxième taux (α₂) étant inférieur au premier taux (α₁).

8. Procédé selon la revendication 7, dans lequel le deuxième taux (α₂) est inférieur à 80 % du premier taux (α₁), ou moins.

9. Procédé selon la revendication 7 ou 8, dans lequel le premier taux (α₁) d'augmentation de la température est dans les limites d'une plage de 1 à 10 °C par minute.

10. Procédé selon l'une quelconque des revendications 7 à 9, dans lequel le deuxième taux (α₂) d'augmentation de la température est dans les limites d'une plage de 1 à 5 °C par minute.

11. Procédé selon l'une quelconque des revendications précédentes, comprenant le fait de refroidir (212) le mélange (MIX) en réduisant la température du mélange selon un troisième taux (α₃) durant un troisième laps de temps (Δt₃), dans lequel le troisième taux (α₃) de réduction de la température est dans les limites d'une plage de 1 à 8 °C par minute.

12. Procédé selon l'une quelconque des revendications précédentes, comprenant les faits
de soumettre (214) le mélange à un premier taux de cisaillement (β₁) durant le premier laps de temps (Δt₁) en injectant (209) de la vapeur (STE) dans le récipient (102) au premier débit de vapeur, et
de soumettre (216) le mélange à un second taux de cisaillement (β₂) durant le deuxième laps de temps (Δt₂) par en faisant tourner un agitateur (118) et/ou en utilisant un agencement rotor-stator (120) situé à l'intérieur du récipient (102), dans lequel le second taux de cisaillement (β₂) est inférieur au premier taux de cisaillement (β₁).
